(19) Europäisches Patentamt
European Patent Office
Office européen des brevets

(11) EP 2 987 826 A1

(12) EUROPEAN PATENT APPLICATION

(43) Date of publication:
**24.02.2016 Bulletin 2016/08**

(51) Int Cl.:
***C08K 5/378*** *(2006.01)*

(21) Application number: **15180926.6**

(22) Date of filing: **13.08.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **18.08.2014 JP 2014165949**

(71) Applicant: **SUMITOMO RUBBER INDUSTRIES, LTD.**
**Kobe-shi, Hyogo-ken, 651-0072 (JP)**

(72) Inventor: **KOMORI, Yoshihiko**
**Kobe-shi, Hyogo 651-0072 (JP)**

(74) Representative: **Manitz, Finsterwald & Partner GbR**
**Martin-Greif-Strasse 1**
**80336 München (DE)**

(54) **TIRE AND METHOD FOR PRODUCING TIRE**

(57) [Subject Matter] To provide a tire having an inner member made of a rubber composition that has excellent fuel efficiency properties and contributes to maintaining processability and excellent rubber strength derived from the contained carbon black, and to provide a method for producing such a tire.

[Solution(s)] A tire is provided with an inner member made of a rubber composition, which is formed with a rubber component containing isoprene-based rubber at 60~100 mass%, 15~55 parts by mass of a carbon black based on 100 parts by mass of the rubber component, 0.05~20 parts by mass of a sulfide compound, represented by formula (I) below, based on 100 parts by mass of the carbon black, and the carbon black is made up of 5~55 parts by mass of a carbon black (A) having a nitrogen adsorption specific surface area of less than 50 $m^2/g$ and of 0~30 parts by mass of a carbon black (B) having a nitrogen adsorption specific surface area of 50 $m^2/g$ or greater; and its manufacturing method.

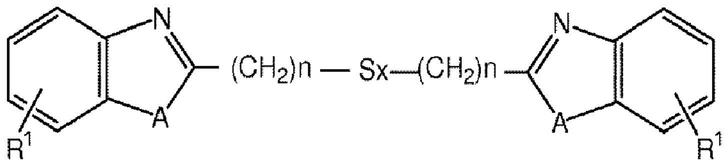

(I)

EP 2 987 826 A1

## Description

Field of the Invention

The present invention relates to a tire provided with an inner member formed using a predetermined rubber composition, and to a method for producing such a tire.

Background Art

Fuel-efficient automobiles have been in high demand in recent years. Since the rubber properties of a tire are known to have a notable impact on fuel efficiency, development of tire rubber compositions that contribute to excellent fuel efficiency is expected. Generally speaking, reducing hysteresis loss in a rubber composition is effective to make a fuel-efficient tire.

As a filler for a tire rubber composition, carbon blacks are generally used in light of their reinforcement effects and wear resistance. To produce fuel-efficient tires by combining carbon black particles, increasing particle diameters of the carbon black and decreasing the content of the carbon black may be employed. However, such a method inevitably causes a reduction in fracture toughness, wear resistance, wet-grip performance and the like. Meanwhile, silica is also known to be used as a filler to achieve fuel efficiency. However, compared with carbon-black formulated rubber, silica formulated rubber exhibits lower rubber strength and the like, and thus it is difficult to achieve sufficient tire properties.

Patent Publication 1 proposes technology for lowering heat generation and enhancing dispersability of carbon black by adding a rubber/carbon black coupling agent containing a particular sulfide compound. However, further improvement is necessary to enhance fuel efficiency while maintaining rubber strength derived from the contained carbon black. Also, there is a problem of diminished processability.

PRIOR ART PUBLICATION

PATENT PUBLICATION

Patent Publication 1: JP2013-23610A

SUMMARY OF THE INVENTION

PROBLEMS TO BE SOLVED BY THE INVENTION

The objective of the present invention is to provide a tire with an inner member made of a rubber composition that has excellent fuel efficiency properties and contributes to maintaining processability and excellent rubber strength derived from the contained carbon black, and to provide a method for producing such a tire.

SOLUTIONS TO THE PROBLEMS

One aspect of the present invention is an unvulcanized tire having an inner member made of a rubber composition formed with the following: a rubber component containing an isoprene-based rubber at 60~100 mass%; 15~55 parts by mass of a carbon black based on 100 parts by mass of the rubber component; and 0.05~20 parts by mass of a sulfide compound, represented by formula (I) below, based on 100 parts by mass of the carbon black. The carbon black is made up of 5~55 parts by mass of a carbon black (A) having a nitrogen adsorption specific surface area of less than 50 $m^2/g$, and of 0~30 parts by mass of a carbon black (B) having a nitrogen adsorption specific surface area of 50 $m^2/g$ or greater:

[chemical formula 1]

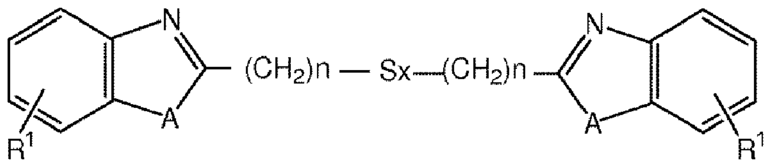

(I)

wherein in the formula $R^1$ indicates a hydrogen atom, a linear or branched alkyl or alkenyl group having 1~6 carbon atoms, or a cyclic alkyl or alkenyl group having 3~6 carbon atoms, A indicates O, S, NH or $NR^2$, $R^2$ indicates a linear or branched alkyl or alkenyl group having 1~6 carbon atoms, or a cyclic alkyl or alkenyl group having 3~6 carbon atoms, n indicates a whole number of 1~6, and x indicates a whole number of 1~4.)

The content of the isoprene-based rubber in the rubber component is preferred to be 90~100 mass%, and the content of the sulfide compound is preferred to be 0.10~10 parts by mass based on 100 parts by mass of the carbon black.

The rubber composition is preferred to further contain 3.0~10.0 parts by mass of zinc oxide based on 100 parts by mass of the rubber component.

Preferably, the unvulcanized tire further comprises a plurality of ply cords comprising a plurality of steel cords.

Moreover, it is preferred that the inner member of the unvulcanized tire is at least one of a sidewall, a clinch, a wing, a breaker, a ply, a sidewall packing, a chafer and a tie gum.

Another aspect of the present invention is a tire being obtainable by vulcanizing the aforementioned unvulcanized tire.

The tire is preferred to be an all-steel tire using steel cords as ply cords.

Another aspect of the present invention is a method for producing a tire having an inner member made of a rubber composition formed with the following: a rubber component containing an isoprene-based rubber at 60~100 mass%; 15~55 parts by mass of a carbon black based on 100 parts by mass of the rubber component; and 0.05~20 parts by mass of a sulfide compound, represented by formula (I) above, based on 100 parts by mass of the carbon black. The carbon black is made up of 5~55 parts by mass of carbon black (A) having a nitrogen adsorption specific surface area of less than 50 $m^2/g$, and 0~30 parts by mass of carbon black (B) having a nitrogen adsorption specific surface area of 50 $m^2/g$ or greater. The method for producing such a rubber composition includes an X-kneading process and an F-kneading process, and the sulfide compound is added in the F-kneading process.

## EFFECTS OF THE INVENTION

According to the present invention, when a tire is provided with an inner member made of a rubber composition that contains a predetermined amount of a particular carbon black and a predetermined amount of a sulfide compound represented by formula (I) below, based on a rubber component containing an isoprene-based rubber at a predetermined amount, a tire with excellent fuel efficiency is produced while processability and rubber strength are maintained.

[chemical formula 2]

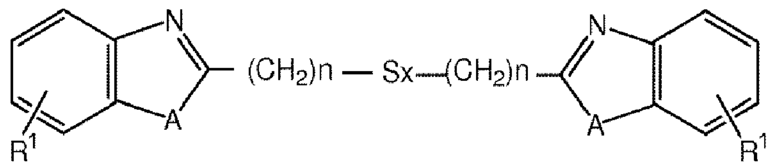

( I )

(In the formula, "$R^1$" indicates a hydrogen atom, a linear or branched alkyl or alkenyl group having 1~6 carbon atoms, or a cyclic alkyl or alkenyl group having 3~6 carbon atoms. "A" indicates O, S, NH or $NR^2$. "$R^2$" indicates a linear or branched alkyl or alkenyl group having 1~6 carbon atoms, or a cyclic alkyl or alkenyl group having 3~6 carbon atoms. Also, "n" indicates a whole number of 1~6, and "x" indicates a whole number of 1~4.)

## DETAILED DESCRIPTION OF THE EMBODIMENTS

The tire related to the present invention is characterized by having an inner member made of a rubber composition that contains a predetermined amount of a particular carbon black and a predetermined amount of a particular sulfide compound, based on a rubber component containing an isoprene-based rubber at a predetermined amount.

Examples of an isoprene-based rubber are natural rubbers (NR), isoprene rubbers (IR), epoxidized natural rubbers (ENR), highly purified natural rubbers (HPNR) and the like. Among those, NR and/or IR are preferred.

An NR is not limited specifically, and SIR20, RSS#3, TSR20 and the like that are generally used in the tire industry may be used. Also, an IR is not limited specifically, and those generally used in the tire industry may be used.

The content of an isoprene-based rubber in the rubber component is set at 60 mass% or greater, preferably 80 mass% or greater. If the content is less than 60 mass%, effects of improving fuel efficiency tend to be insufficient. In addition, the content of an isoprene-based rubber is preferred to be 100 mass% because well-balanced rubber strength and fuel efficiency are achieved at such a content. However, the content may be set at 90 mass% or less if another rubber component is also blended in.

The rubber composition related to the present invention may contain a rubber component other than the aforementioned isoprene-based rubber. Examples of another rubber component are diene-based rubbers such as butadiene rubbers (BR), styrene-butadiene rubbers (SBR), chloroprene rubbers (CR), styrene-isoprene-butadiene rubbers (SIBR), styrene-isoprene rubbers (SIR), and isoprene-butadiene rubbers. Among them, BR are preferred because they exhibit excellent compatibility with isoprene-based rubbers.

Examples of a BR are not limited specifically; for example, a BR having a cis content of 95 mass% or greater (high cis content BR), rare earth-based butadiene rubber (rare earth-based BR) synthesized using a rare earth element-based catalyst, BR containing syndiotactic-polybutadiene crystals (SPB containing BR), modified BR and the like may be used. Among them, it is preferred to use at least one rubber selected from among a group consisting of SPB containing BR, rare earth-based BR and modified BR. It is especially preferred to use a rare earth-based BR.

As a rare earth-based BR, preferred examples are those synthesized using a rare earth element-based catalyst and having a vinyl content of 1.0 mass% or less (preferably 0.8 mass% or less) and a cis content of 95 mass% or greater. In the present application, the vinyl content (content of 1, 2-bonded butadiene units) and the cis content (content of cis-1,4-bonded butadiene units) are measured through infrared absorption spectrum analysis.

Any known rare earth element-based catalysts may be used for synthesizing a rare earth-based BR; for example, they may be catalysts containing a lanthanide rare earth element compound, organic aluminum compound, aluminoxane, halogen-containing compound, and a Lewis base if applicable. Among those, it is preferred to use a catalyst containing a lanthanide rare earth element compound, and especially preferred is an Nd-based catalyst using a neodymium (Nd)-containing compound.

In an SPB-containing BR, 1,2-syndiotactic polybutadiene crystals are preferred not to be simply dispersed in the BR but to be dispersed after the crystals are chemically bonded with the BR. When the crystals are chemically bonded with the rubber component and dispersed, the complex elastic modulus is likely to improve. Examples of such an SPB-containing BR are VCR-303, 412, 617 and the like, made by Ube Industries, Ltd.

A modified BR is preferred to be a tin-modified BR obtained by polymerizing 1,3-butadiene using a lithium initiator and then by adding a tin compound. It is more preferred to use a tin-terminally modified BR where a tin-carbon bond is attached to a terminal of the BR molecule.

Examples of a lithium initiator are lithium compounds such as alkyl lithium, aryl lithium, vinyl lithium; tin-containing or nitrogen-containing organolithium compounds; and lithium metals. By using such a lithium initiator as the initiator for a modified BR, a modified BR having high-vinyl and low-cis content is produced.

Examples of tin compounds are tin tetrachloride, butyl tin trichloride, dibutyltin dichloride, dioctyltin dichloride, tributyltin chloride, triphenyltin chloride, diphenyl dibutyltin, triphenyltin ethoxide, diphenyl dimethyl tin, ditolyl tin chloride, diphenyltin dioctanoate, divinyl diethyltin, tetrabenzyl-tin, dibutyltin distearate, tetraaryl tin, p-tributyltin styrene and the like. Those tin compounds listed above may be used alone or in combination thereof.

When the rubber component contains a BR, its content is preferred to be 10 mass% or greater. If the content is less than 10 mass%, effects derived from containing a BR tend to be insufficient. In addition, the content of a BR is preferred to be 40 mass% or less, more preferably 20 mass% or less. If the content exceeds 40 mass%, the rubber strength tends to decrease.

The carbon black is made of carbon black (A) or a combination of carbon black (A) and carbon black (B).

The nitrogen adsorption specific surface area ($N_2SA$) of carbon black (A) is less than 50 $m^2/g$, preferably 45 $m^2/g$ or less. When carbon black (A) is contained, well-balanced improvements to rubber strength and fuel efficiency are achieved. In addition, the $N_2SA$ of carbon black (A) is preferred to be 10 $m^2/g$ or greater, more preferably 20 $m^2/g$ or greater. If the $N_2SA$ is less than 10 $m^2/g$, reinforcement effects are insufficient, and rubber strength tends to decrease. Here, the $N_2SA$ of a carbon black related to the present invention is the value measured in compliance with JIS K 6217A.

The nitrogen adsorption specific surface area ($N_2SA$) of carbon black (B) is 50 $m^2/g$ or greater, preferably 70 $m^2/g$ or greater. When carbon black (B) in addition to carbon black (A) is added, the rubber strength is further improved. The $N_2SA$ of carbon black (B) is preferred to be 200 $m^2/g$ or less, more preferably 180 $m^2/g$ or less. If the $N_2SA$ exceeds 200 $m^2/g$, fuel efficiency tends to be low.

Based on 100 parts by mass of the rubber component, the content of carbon black (A) is 5 parts by mass or greater, preferably 10 parts by mass or greater, more preferably 20 parts by mass or greater. If the content of carbon black (A) is less than 5 parts by mass, sufficient rubber strength is less likely to be obtained. In addition, the content of carbon black (A) is 55 parts by mass or less, preferably 53 parts by mass or less, more preferably 50 parts by mass or less. If the content of carbon black (A) exceeds 55 parts by mass, fuel efficiency tends to be lowered.

Based on 100 parts by mass of the rubber component, the content of carbon black (B) is zero parts by mass or greater, preferably 5 parts by mass or greater, more preferably 10 parts by mass or greater. If the content of carbon black (B) is 5 parts by mass or greater, rubber strength is further enhanced. In addition, the content of carbon black (B) is 30 parts by mass or less, preferably 25 parts by mass or less, more preferably 20 parts by mass or less, and even more preferably 15 parts by mass or less. If the content of carbon black (B) exceeds 30 parts by mass, fuel efficiency tends to be lowered.

Based on 100 parts by mass of the rubber component, the total content of carbon black (A) and carbon black

(B) is 15 parts by mass or greater, preferably 20 parts by mass or greater, more preferably 25 parts by mass or greater. When the total content of carbon blacks is less than 15 parts by mass, rubber strength tends to be low. In addition, the total content of carbon blacks is 55 parts by mass or less, preferably 53 parts by mass or less, more preferably 50 parts by mass or less. If the total content of carbon blacks exceeds 55 parts by mass, fuel efficiency tends to be lowered.

The sulfide compound is represented by formula (I) below.

[chemical formula 3]

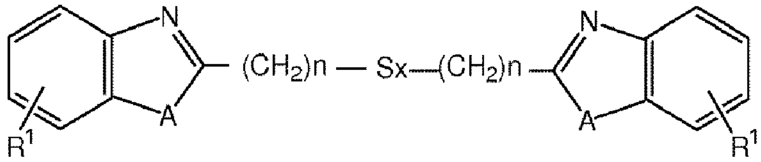

( I )

(In the formula, "$R^1$" indicates a hydrogen atom, a linear or branched alkyl or alkenyl group having 1~6 carbon atoms, or a cyclic alkyl or alkenyl group having 3~6 carbon atoms. "A" indicates O, S, NH or $NR^2$. "$R^2$" indicates a linear or branched alkyl or alkenyl group having 1~6 carbon atoms, or a cyclic alkyl or alkenyl group having 3~6 carbon atoms. Also, "n" indicates a whole number of 1~6, and "x" indicates a whole number of 1~4.)

Examples of a sulfide compound represented by formula (I) are 2,2'-bis(benzimidazolyl-2)ethyl sulfide, 2,2'-bis(benzimidazolyl-2)ethyl disulfide, 2,2'-bis(benzimidazolyl-2)ethyl trisulfide, 2,2'-bis(benzimidazolyl-2)ethyl tetrasulfide, 3,3'-bis(benzimidazolyl-2)propyl disulfide, 3,3'-bis(benzimidazolyl-2)propyl trisulfide, 3,3'-bis(benzimidazolyl-2)propyl tetrasulfide, 4,4'-bis(benzimidazolyl-2)butyl disulfide, 4,4'-bis(benzimidazolyl-2)butyl trisulfide, 4,4'-bis(benzimidazolyl-2)butyl tetrasulfide, 5,5'-bis(benzimidazolyl-2)pentyl disulfide, 5,5'-bis(benzimidazolyl-2)pentyl trisulfide, 5,5'-bis(benzimidazolyl-2)pentyl tetrasulfide 6,6'-bis(benzimidazolyl-2)hexyl disulfide, 6,6'-bis(benzimidazolyl-2)hexyl trisulfide, 6,6'-bis(benzimidazolyl-2)hexyl tetrasulfide, 2,2'-bis(1-methyl benzimidazolyl-2)ethyl disulfide, 2,2'-bis(4-methyl benzimidazolyl-2)ethyl disulfide, 2,2'-bis(5-methyl benzimidazolyl-2)ethyl disulfide, 3,3'-bis(1-methyl benzimidazolyl-2)propyl disulfide, 3,3'-bis(4-methyl benzimidazolyl-2)propyl disulfide, 3,3'-bis(5-methyl benzimidazolyl-2)propyl disulfide, 2,2'-bis(1-ethyl benzimidazolyl-2)ethyl disulfide, 2,2'-bis(4-ethyl benzimidazolyl-2)ethyl disulfide, 2,2'-bis(5-ethyl benzimidazolyl-2)ethyl disulfide, 3,3'-bis(1-ethyl benzimidazolyl-2)propyl disulfide, 3,3'-bis(4-ethyl benzimidazolyl-2)propyl disulfide, 3,3'-bis(5-ethyl benzimidazolyl-2)propyl disulfide, 3,3'-bis(1-n-propyl benzimidazolyl-2)propyl disulfide, 3,3'-bis(4-n-propyl benzimidazolyl-2)propyl disulfide, 3,3'-bis(5-n-propyl benzimidazolyl-2)propyl disulfide, 3,3'-bis(1-isopropyl benzimidazolyl-2)propyl disulfide, 3,3'-bis(4-isopropyl benzimidazolyl-2)propyl disulfide, 3,3'-bis(5-isopropyl benzimidazolyl-2)propyl disulfide, 3,3'-bis(1-tert-butyl benzimidazolyl-2)propyl disulfide, 3,3'-bis(4-tert-butyl benzimidazolyl-2)propyl disulfide, 3,3'-bis(5-tert-butyl benzimidazolyl-2)propyl disulfide, 2,2'-bis(benzoxazolyl-2)ethyl disulfide, 2,2'-bis(benzoxazolyl-2)ethyl trisulfide, 2,2'-bis(benzoxazolyl-2)ethyl tetrasulfide, 3,3'-bis(benzoxazolyl-2)propyl disulfide, 4,4'-bis(benzoxazolyl-2)butyl disulfide, 5,5'-bis(benzoxazolyl-2)pentyl disulfide, 6,6'-bis(benzoxazolyl-2)hexyl disulfide, 2,2'-bis(4-methyl benzoxazolyl-2)ethyl disulfide, 2,2'-bis(4-methyl benzoxazolyl-2)ethyl trisulfide, 2,2'-bis(4-methyl benzoxazolyl-2)ethyl tetrasulfide, 2,2'-bis(5-methyl benzoxazolyl-2)ethyl disulfide, 2,2'-bis(5-methyl benzoxazolyl-2)ethyl trisulfide, 2,2'-bis(5-methyl benzoxazolyl-2)ethyl tetrasulfide, 3,3'-bis(6-methyl benzoxazolyl-2)propyl disulfide, 3,3'-bis(6-methyl benzoxazolyl-2)propyl trisulfide, 3,3'-bis(6-methyl benzoxazolyl-2)propyl tetrasulfide, 2,2'-bis(benzthiazolyl-2)ethyl disulfide, 2,2'-bis(benzthiazolyl-2)ethyl trisulfide, 2,2'-bis(benzthiazolyl-2)ethyl tetrasulfide, 3,3'-bis(benzthiazolyl-2)propyl disulfide, 4,4'-bis(benzthiazolyl-2)butyl disulfide, 5,5'-bis(benzthiazolyl-2)pentyl disulfide, 6,6'-bis(benzthiazolyl-2)hexyl disulfide, 3,3'-bis(4-methyl benzthiazolyl-2)propyl disulfide, 3,3'-bis(4-methyl benzthiazolyl-2)propyl trisulfide, 3,3'-bis(4-methyl benzthiazolyl-2)propyl tetrasulfide, 3,3'-bis(5-ethyl benzthiazolyl-2)propyl disulfide, 3,3'-bis(5-ethyl benzthiazolyl-2)propyl trisulfide, 3,3'-bis(5-ethyl benzthiazolyl-2)propyl tetrasulfide, 3,3'-bis(6-n-propyl benzthiazolyl-2)propyl disulfide, 3,3'-bis(6-n-propyl benzthiazolyl-2)propyl trisulfide, 3,3'-bis(6-n-propyl benzthiazolyl-2)propyl tetrasulfide, 3,3'-bis(7-isopropyl benzthiazolyl-2)propyl disulfide, 3,3'-bis(7-isopropyl benzthiazolyl-2)propyl trisulfide, 3,3'-bis(7-isopropyl benzthiazolyl-2)propyl tetrasulfide and the like. Those sulfide compounds may be used alone or in combination thereof.

A sulfide compound represented by formula (I) above has condensed aromatic heterocycles in the molecule. Thus, in addition to bonding to a carbon black surface through acid-base group interactions, the sulfide compound forms bonds with benzene rings on the carbon black surface through $\pi$ electron interactions. Also, polymer bonds are formed through reactions of the sulfur (Sx) and polymer radicals or reactions involving sulfur crosslinking. Accordingly, the dispersability of the carbon black in the rubber composition is enhanced, and its dispersed state is maintained. In addition, since polymers are confined by bonds with carbon blacks, heat generation is suppressed.

A sulfide compound represented by formula (I) is usually in a state of solid powder. To enhance the dispersability in a rubber composition, it is preferred to use fine particulate powder with a small average particle diameter. Making fine particulate powder from a sulfide compound is not limited specifically; for example, jet mill pulverization or dry pulverization

may be employed.

The nitrogen adsorption specific surface area ($N_2SA$) of the fine particulate powder of a sulfide compound represented by formula (I) above is preferred to be 2.0 $m^2/g$ or greater, more preferably 2.5 $m^2/g$ or greater, even more preferably 5.0 $m^2/g$ or greater, especially preferably 10.0 $m^2/g$ or greater. If the $N_2SA$ is less than 2.0 $m^2/g$, the average particle diameter is large, resulting in insufficient dispersability of the fine particulate powder in the rubber composition. The upper limit of the $N_2SA$ of the fine particulate powder is not limited specifically, but it is preferred to be set at 100 $m^2/g$ or less in consideration of cost performance. Here, the $N_2SA$ of a sulfide compound in the present application is the value measured in compliance with JIS K 6217A, the same as for carbon blacks described above.

A sulfide compound represented in formula (I) above is preferred to be contained as an oil-extended compound, because particles of the sulfide compound will have better affinity with the rubber component, and dispersability of the particles is thereby enhanced. The amount of oil is preferred to be 5 parts by mass or more, more preferably 10 parts by mass or more, based on 100 parts by mass of a sulfide compound. If the amount of rubber extender oil is less than 5 parts by mass, the effects of enhancing dispersability tend to be insufficient. In addition, the amount of oil is preferred to be 40 parts by mass or less, more preferably 30 parts by mass or less. If the amount of oil exceeds 40 parts by mass, the percentage of a sulfide compound in the oil-extended compound decreases, and effects derived from containing the sulfide compound are lowered. Also, the rubber composition is softened, likely resulting in lowered handling performance of the tire produced using the rubber composition.

Based on 100 parts by mass of the carbon black, the content of a sulfide compound represented by formula (I) above is 0.05 parts by mass or greater, preferably 0.10 parts by mass or greater, more preferably 0.20 parts by mass or greater. If the content is less than 0.05 parts by mass, the effects derived from containing the sulfide compound are less likely to be achieved. In addition, the content of a sulfide compound is 20 parts by mass or less, preferably 10 parts by mass or less, more preferably 3 parts by mass or less. If the content exceeds 20 parts by mass, processability of the rubber composition tends to be lowered. When an oil-extended sulfide compound is used as the sulfide compound represented by formula (I) above, the content of a sulfide compound is that measured by excluding the oil content.

In addition to the aforementioned components, the rubber composition related to the present invention may contain additives generally used for producing a rubber composition: for example, reinforcement fillers other than carbon black, such as silica, calcium carbonate and clay; coupling agents; zinc oxide; stearic acid; various antiaging agents; oils such as aromatic oil (when an oil-extended sulfide compound is used, oil other than the rubber extender oil); softening agents; wax; vulcanizing agents such as sulfur; various vulcanization accelerators; and so forth.

Examples of zinc oxide are not limited specifically, and those generally used in the tire industry may be used.

Based on 100 parts by mass of the rubber component, the content of zinc oxide is preferred to be 3.0 parts by mass or greater, more preferably 3.5 parts by mass or greater. If the content of zinc oxide is less than 3.0 parts by mass, processability and adhesiveness properties tend to be lower. In addition, the content of zinc oxide is preferred to be 10.0 parts by mass or less, more preferably 7.0 parts by mass or less. If the content of zinc oxide exceeds 10.0 parts by mass, fuel efficiency and fracture toughness tend to be lowered.

As for an antiaging agent, amine-based, phenol-based and imidazole-based compounds, metal salts of carbamic acids, wax and the like may be selected as desired. Especially preferred is an amine-based antiaging agent, more preferably N-(1,3-dimethylbutyl)-N'-phenyl-p-phenylenediamine.

When an antiaging agent is added, its content is preferred to be 0.5 parts by mass or greater, more preferably 1.0 part by mass or greater, and 7 parts by mass or less, more preferably 5 parts by mass or less, based on 100 parts by mass of the rubber component. When the content of an antiaging agent is set in the above range, the intended effects of the present invention are achieved well.

When an oil is contained, the content of the oil (if it is an oil-extended sulfide compound, the content of oil excluding the amount of the rubber extender oil) is preferred to be 1 part by mass or greater, more preferably 2 parts by mass or greater, and 20 parts by mass or less, more preferably 15 parts by mass or less, based on 100 parts by mass of the rubber component. When the content of the oil is set in the above range, the intended effects of the present invention are achieved well.

The aforementioned sulfur indicates the pure sulfur ingredient contained in a vulcanization agent, and does not include the sulfur ingredient contained in a vulcanization accelerator or the like. As a sulfur, insoluble sulfur generally used in the rubber industry is preferred to be used.

The sulfur content based on 100 parts by mass of the rubber component is preferred to be 1.8 parts by mass or greater, more preferably 2.0 parts by mass or greater. When the sulfur content is less than 1.8 parts by mass, and when the rubber material is set adjacent to a tire member such as a composition for steel-cord topping rubber that contains a large amount of sulfur, the degree of sulfur migration from the tire member increases and the durability of the tire is likely to decrease. The sulfur content is preferred to be 3.0 parts by mass or less, more preferably 2.8 parts by mass or less. If the sulfur content exceeds 3.0 parts by mass, the rubber strength after oxygen degradation tends to decrease. When insoluble sulfur is used, the sulfur content indicates the pure sulfur ingredient obtained by excluding the oil ingredient.

Examples of a vulcanization accelerator are sulfenamide-based, chiazole-based, thiuram-based, thiourea-based, guanidine-based, dithiocarbamic acid-based, aldehyde-amine-based or aldehyde-ammonia-based, imidazoline-based, or xanthate-based vulcanization accelerators. Those accelerators may be used alone or in combination thereof. Especially, sulfenamide-based vulcanization accelerators are preferred because their vulcanization characteristics are excellent, and the vulcanized rubber exhibits excellent fuel efficiency. Examples are N-tert-butyl-2-benzothiazole sulfenamide (TBBS), N-cyclohexyl-2-benzothiazole sulfenamide (CBS), N,N'-dicylohexyl-2-benzothiazole sulfenamide (DZ) and the like. Among them, TBBS is more preferred.

When a vulcanization accelerator is added, its content based on 100 parts by mass of the rubber component is preferred to be 0.1 parts by mass or greater, more preferably 0.5 parts by mass or greater. If the content is less than 0.1 parts by mass, the rubber composition may not be vulcanized sufficiently, and the desired rubber properties may not be achieved. In addition, the amount of a vulcanization accelerator is preferred to be 5 parts by mass or less, more preferably 3 parts by mass or less. If the content exceeds 5 parts by mass, rubber scorching may occur.

The method for producing a rubber composition related to the present invention is not limited specifically, and any known method may be employed. For example, an X-kneading process is conducted by kneading ingredients except for the aforementioned sulfur, vulcanization accelerator and sulfide compound using a rubber kneading apparatus such as an open roll, Banbury mixer or sealed kneader; then an F-kneading process is conducted by adding the aforementioned sulfur, vulcanization accelerator and sulfide compound to the kneaded material and further kneading them together; and finally a vulcanization process is conducted. Here, adding a sulfide compound to the F-kneading process is preferred since fuel efficiency properties are enhanced and processability is also enhanced. That is because adding a sulfide compound to the X-kneading process causes partially accelerated reactions and results in lowered processability, but adding a sulfide compound to the F-kneading process can avoid such phenomena.

The tire related to the present invention has an inner member formed using the rubber composition. Here, examples of such a tire inner member are those excluding a tire tread (the cap tread if the tread is double-layered), namely, a sidewall, clinch, wing, breaker, ply, sidewall packing, chafer, tie gum and the like.

A tire related to the present invention is produced as follows: an unvulcanized rubber composition is prepared by combining a rubber component related to the present invention using the above method, namely, by combining the aforementioned additives to the rubber component as desired; the rubber composition is extruded to be molded into the shape of each tire member, laminated with other tire members on a tire molding machine, and molded into shape by a generally employed method; and then, the obtained unvulcanized tire is vulcanized while being heated in a vulcanization machine. Accordingly, a tire related to the present invention is produced.

The tire related to the present invention can be used for general purpose tires such as passenger-car radial tires, all-steel tires, industrial tires and the like. Since the tire exhibits excellent durability and fuel efficiency, it is especially preferred to be used for all-steel tires formed using steel cords for ply cords.

[Examples]

The present invention is further described in detail with reference to the examples below. However, the present invention is not limited to those examples.

Various chemicals used in the examples and comparative examples are listed below.

NR: TSR20
IR: IR2200
BR: synthesized BR (Nd-BR) obtained by using CB25 (a neodymium (Nd)-based catalyst), made by LANXESS (cis content: 97 mass%, vinyl content: 0.7 mass%, Mw/Mn: 1.78, Nw: 500,000, Mn: 280,000)
Sulfide compound 1: 2EBZ made by Shikoku Chemicals Corporation (2,2'-bis(benzimidazolyl-2)ethyl disulfide, in formula (I) "$R^1$" is a hydrogen atom, "A" is NH, "n" is 2, "x" is 2, $N_2SA$: 10.5 $m^2/g$, not oil extended).
Sulfide Compound 2: oil-extended compound obtained by adding 30 parts by mass of oil to 100 parts by mass of sulfide compound 1 (rubber extender oil: Process X-40, made by Japan Energy Co., Ltd.)
Sulfide Compound 3: 4EBZ made by Shikoku Chemicals Corporation (2,2'-bis(benzimidazolyl-2)ethyl tetrasulfide, in formula (I), "$R^1$" is a hydrogen atom, "A" is NH, "n" is 2, "x" is 4, $N_2SA$: 2.5 $m^2/g$, not oil extended).
Sulfide Compound 4: oil-extended compound obtained by adding 30 parts by mass of oil to 100 parts by mass of sulfide compound 3 (rubber extender oil: Process X-40, made by Japan Energy Co., Ltd.)
Carbon Black (A1): STATEX N550, made by Columbian Chemical Company ($N_2SA$: 40 $m^2/g$)
Carbon Black (A2): STATEX N660, made by Columbian Chemical Company ($N_2SA$: 34 $m^2/g$)
Carbon Black (A3): STATEX N762, made by Columbian Chemical Company ($N_2SA$: 29 $m^2/g$)
Carbon Black (B1): STATEX N220, made by Columbian Chemical Company ($N_2SA$: 119 $m^2/g$)
Carbon Black (B2): Dia Black #30, made by Mitsubishi Chemical Corporation ($N_2SA$: 74 $m^2/g$)
Carbon Black (B3): N110, made by Mitsubishi Chemical Corporation ($N_2SA$:142 $m^2/g$)

C5 Petroleum Resin: Marukarets T-100AS, made by Maruzen Petrochemical Co., Ltd. (softening point: 102°C)
TDAE oil: VIVATEC 400, made by H&R Group
Antiaging Agent 1: Antigen 6C
(N-(1,3-dimethylbutyl)-N'-phenyl-p-phenylenediamine (6PPD)), made by Sumitomo Chemical Co., Ltd.
Antiaging agent 2: NOCRAC 224 (2,2,4-trimethyl-1,2-dihydroquinoline polymer (TMQ)), made by Ouchi Shinko Chemical Industrial Co., Ltd.
Stearic Acid: Tsubaki made by NOF Corp.
Zinc Oxide: Ginrei R, made by Toho Zinc Co., Ltd.
Sulfur: HK-200-5 (powdered sulfur containing 5% oil), made by Hosoi Chemical Industry Co., Ltd.
Vulcanization Accelerator 1: NOCCELER-NS (N-tert-butyl-2- benzothiazolyl sulfenamide (TBBS)), made by Ouchi Shinko Chemical

Examples and Comparative Examples

According to the formula for each example and comparative example shown in Tables 1~4, chemicals excluding sulfur, vulcanization accelerator and sulfide compound were kneaded at a discharge temperature of 150°C for four minutes in a 1.7 L sealed Banbury mixer (X-kneading process), and a kneaded material was obtained. Next, the sulfur, vulcanization accelerator and sulfide compound were added to the kneaded material and further kneaded at a discharge temperature of 105°C for two minutes in a 1.7 L sealed Banbury mixer (F-kneading process), and an unvulcanized rubber composition was obtained. In addition, the unvulcanized rubber composition was vulcanized under conditions of 150°C for 30 minutes to obtain a vulcanized rubber composition.

The unvulcanized rubber composition and the vulcanized rubber composition for each example and comparative example were evaluated by the methods shown below. Evaluation results are shown in each Table.

<Viscoelasticity Test>

Using a viscoelasticity spectrometer VES, made by Iwamoto Seisakusho K.K., the loss tangent (tan δ) of each vulcanized rubber composition was measured under conditions of temperature of 40°C, frequency of 10 Hz, initial strain of 10%, and dynamic strain of 2%. The result is shown in an index based on the value of tan δ obtained in Comparative Example 1 being set at 100 and calculated by the computation formula below. The greater the fuel efficiency index is, the better are the rolling resistance properties (fuel efficiency properties). An index of 110 or greater is a targeted value for the property.

$$\text{fuel efficiency index} = (\tan\delta \text{ of Comparative Example 1}) / (\tan\delta \text{ of each formula}) \times 100$$

<Tensile Test>

Using a No. 3 dumbbell shaped test piece made of each vulcanized rubber composition, a tensile test was conducted at room temperature to measure elongation at break EB (%) in compliance with JIS K 6251 "Rubber, vulcanized or thermoplasticsDetermination of tensile stress-strain properties." Also, the test piece was thermally oxygen-degraded under conditions of temperature at 80°C for 96 hours and elongation at break EB (%). The result is shown in an index based on the value of elongation at break obtained in Comparative Example 1 being set at 100 and calculated by the computation formula below. The greater the EB index is, the more superior is the rubber strength. An index of 90 or greater is a targeted value for the property.

$$\text{EB index} = (\text{EB of each formula}) / (\text{EB of Comparative Example 1}) \times 100$$

<Processability Test>

The Mooney viscosity ($ML_{1+4}$) of each unvulcanized rubber composition was measured under conditions of temperature at 130°C according to the measurement method specified in JIS K 6300-1 "Rubber, unvulcanized -- Physical property -- Part 1: Determination of Mooney viscosity and pre-vulcanization characteristics with Mooney viscometer." The result is shown in an index based on the value of Mooney viscosity obtained in Comparative Example 1 being set

at 100 and calculated by the computation formula below. The greater the processability index is, the lower is the Mooney viscosity and the better is the processability. An index of 90 or greater is a targeted value for the property.

$$\text{processability index} = (ML_{1+4} \text{ of Comparative Example 1}) / (ML_{1+4} \text{ of each formula}) \times 100$$

Table 1

| | | Example | | | | | | | | | | | | |
|---|---|---|---|---|---|---|---|---|---|---|---|---|---|---|
| | | 1 | 2 | 3 | 4 | 5 | 6 | 7 | 8 | 9 | 10 | 11 | 12 | 13 |
| Formula (parts by mass) | NR | 100 | 100 | 100 | 100 | 100 | 100 | 80 | 100 | 100 | 60 | 100 | 100 | 80 |
| | IR | – | – | – | – | – | – | 20 | – | – | – | – | – | 20 |
| | BR | – | – | – | – | – | – | – | – | – | 40 | – | – | – |
| | Sulfide Compound 1 | 0.5 | 1.0 | 3.0 | – | – | 1.0 | 1.0 | 1.0 | 1.0 | 1.0 | 1.0 | 1.0 | 1.0 |
| | Sulfide Compound 2 | – | – | – | 0.5 | 3.0 | – | – | – | – | – | – | – | – |
| | Carbon Black A1 ($N_2SA$: 40) | 45 | 45 | 45 | 45 | 45 | 10 | 15 | 45 | 45 | 45 | 45 | 45 | 45 |
| | Carbon Black A2 ($N_2SA$: 34) | – | – | – | – | – | 45 | – | – | – | – | – | – | – |
| | Carbon Black A3 ($N_2SA$: 29) | – | – | – | – | – | – | – | – | – | – | – | – | – |
| | Carbon Black B1 ($N_2SA$: 119) | – | – | – | – | – | – | 20 | – | – | – | – | – | – |
| | Carbon Black B2 ($N_2SA$: 74) | – | – | – | – | – | – | – | – | – | – | – | – | – |
| | Carbon Black B3 ($N_2SA$: 142) | – | – | – | – | – | – | – | – | – | – | – | – | – |
| | (Content of Sulfide Compound to Carbon Black (parts by mass)) | (1.11) | (2.22) | (6.67) | (1.11) | (6.67) | (1.82) | (2.86) | (2.22) | (2.22) | (2.22) | (2.22) | (2.22) | (2.22) |
| | C5 Petroleum Resin | 2.0 | 2.0 | 2.0 | 2.0 | 2.0 | 2.0 | 2.0 | 2.0 | 2.0 | 2.0 | 2.0 | 2.0 | 2.0 |
| | TDAE Oil | 2.0 | 2.0 | 2.0 | 2.0 | 2.0 | 2.0 | 2.0 | 2.0 | 2.0 | 2.0 | 2.0 | 2.0 | 2.0 |
| | Antiaging Agent 1 | 1.0 | 1.0 | 1.0 | 1.0 | 1.0 | 1.0 | 1.0 | 1.0 | 1.0 | 1.0 | 1.0 | 1.0 | 1.0 |
| | Antiaging Agent 2 | 1.0 | 1.0 | 1.0 | 1.0 | 1.0 | 1.0 | 1.0 | 1.0 | 1.0 | 1.0 | 1.0 | 1.0 | 1.0 |
| | Stearic Acid | 2.0 | 2.0 | 2.0 | 2.0 | 2.0 | 2.0 | 2.0 | 2.0 | 2.0 | 2.0 | 2.0 | 2.0 | 2.0 |
| | Zinc Oxide | 4.0 | 4.0 | 4.0 | 4.0 | 4.0 | 4.0 | 4.0 | 4.0 | 4.0 | 4.0 | 3.0 | 10.0 | 4.0 |
| | Sulfur (containing 5% oil) | 2.8 | 2.8 | 2.8 | 2.8 | 2.8 | 2.8 | 2.8 | 2.1 | 3.15 | 2.8 | 2.8 | 2.8 | 2.8 |
| | Vulcanization Accelerator | 0.7 | 0.7 | 0.7 | 0.7 | 0.7 | 0.7 | 0.7 | 1.0 | 0.5 | 0.7 | 0.7 | 0.7 | 0.7 |
| Evaluation Results | Fuel Efficiency index | 127 | 133 | 149 | 130 | 155 | 130 | 125 | 115 | 125 | 115 | 130 | 125 | 130 |
| | EB index: New Rubber | 101 | 102 | 100 | 102 | 105 | 98 | 113 | 94 | 105 | 95 | 102 | 110 | 101 |
| | EB index: Oxygen-Degraded Rubber | 104 | 108 | 110 | 107 | 106 | 94 | 109 | 108 | 92 | 91 | 107 | 114 | 105 |
| | Processability index | 97 | 95 | 91 | 97 | 93 | 98 | 93 | 96 | 98 | 90 | 94 | 112 | 97 |

Table 2

| | | Example | | | | | | | | |
|---|---|---|---|---|---|---|---|---|---|---|
| | | 14 | 15 | 16 | 17 | 18 | 19 | 20 | 21 | 22 |
| Formula (parts by mass) | NR | 100 | 100 | 100 | 100 | 100 | 100 | 100 | 100 | 100 |
| | IR | – | – | – | – | – | – | – | – | – |
| | BR | – | – | – | – | – | – | – | – | – |
| | Sulfide Compound 1 | 1.0 | 1.0 | 1.0 | 1.0 | 1.0 | 1.0 | 1.0 | 1.0 | 1.0 |
| | Sulfide Compound 2 | – | – | – | – | – | – | – | – | – |
| | Carbon Black A1 ($N_2SA$: 40) | 50 | 20 | – | – | 15 | – | – | 15 | 15 |
| | Carbon Black A2 ($N_2SA$: 34) | – | – | 45 | – | – | 15 | – | – | – |
| | Carbon Black A3 ($N_2SA$: 29) | – | – | – | 45 | – | – | 15 | – | – |
| | Carbon Black B1 ($N_2SA$: 119) | – | – | – | – | 20 | 20 | 20 | – | – |
| | Carbon Black B2 ($N_2SA$: 74) | – | – | – | – | – | – | – | 20 | – |
| | Carbon Black B3 ($N_2SA$: 142) | – | – | – | – | – | – | – | – | 20 |
| | (Content of Sulfide Compound to Carbon Black (parts by mass)) | (2.00) | (5.00) | (2.22) | (2.22) | (2.86) | (2.86) | (2.86) | (2.86) | (2.86) |
| | C5 Petroleum Resin | 2.0 | 2.0 | 2.0 | 2.0 | 2.0 | 2.0 | 2.0 | 2.0 | 2.0 |
| | TDAE Oil | 2.0 | 2.0 | 2.0 | 2.0 | 2.0 | 2.0 | 2.0 | 2.0 | 2.0 |
| | Antiaging Agent 1 | 1.0 | 1.0 | 1.0 | 1.0 | 1.0 | 1.0 | 1.0 | 1.0 | 1.0 |
| | Antiaging Agent 2 | 1.0 | 1.0 | 1.0 | 1.0 | 1.0 | 1.0 | 1.0 | 1.0 | 1.0 |
| | Stearic Acid | 2.0 | 2.0 | 2.0 | 2.0 | 2.0 | 2.0 | 2.0 | 2.0 | 2.0 |
| | Zinc Oxide | 4.0 | 4.0 | 4.0 | 4.0 | 4.0 | 4.0 | 4.0 | 4.0 | 4.0 |
| | Sulfur (containing 5% oil) | 2.8 | 2.8 | 2.8 | 2.8 | 2.8 | 2.8 | 2.8 | 2.8 | 2.8 |
| | Vulcanization Accelerator | 0.7 | 0.7 | 0.7 | 0.7 | 0.7 | 0.7 | 0.7 | 0.7 | 0.7 |
| Evaluation Results | Fuel Efficiency index | 131 | 135 | 132 | 130 | 127 | 128 | 127 | 134 | 125 |
| | EB index: New Rubber | 102 | 120 | 103 | 105 | 115 | 115 | 116 | 107 | 116 |
| | EB index: Oxygen-Degraded Rubber | 109 | 101 | 109 | 108 | 110 | 110 | 111 | 109 | 111 |
| | Processability index | 95 | 99 | 95 | 95 | 95 | 95 | 96 | 96 | 93 |

Table 3

| | | Example | | | | | | |
|---|---|---|---|---|---|---|---|---|
| | | 23 | 24 | 25 | 26 | 27 | 28 | 29 |
| Formula (parts by mass) | NR | 100 | 100 | 100 | 100 | 100 | 100 | 100 |
| | IR | – | – | – | – | – | – | – |
| | BR | – | – | – | – | – | – | – |
| | Sulfide Compound 1 | – | – | – | – | – | 0.03 | 6.75 |
| | Sulfide Compound 2 | – | – | – | – | – | – | – |
| | Sulfide Compound 3 | 0.5 | 1.0 | 3.0 | – | – | – | – |
| | Sulfide Compound 4 | – | – | – | 0.5 | 3.0 | – | – |
| | Carbon Black A1 ($N_2SA$: 40) | 45 | 45 | 45 | 45 | 45 | 45 | 45 |
| | (Content of Sulfide Compound to Carbon Black (parts by mass)) | (1.11) | (2.22) | (6.67) | .(1.11) | (6.67) | (0.07) | (15.0) |
| | C5 Petroleum Resin | 2.0 | 2.0 | 2.0 | 2.0 | 2.0 | 2.0 | 2.0 |
| | TDAE Oil | 2.0 | 2.0 | 2.0 | 2.0 | 2.0 | 2.0 | 2.0 |
| | Antiaging Agent 1 | 1.0 | 1.0 | 1.0 | 1.0 | 1.0 | 1.0 | 1.0 |
| | Antiaging Agent 2 | 1.0 | 1.0 | 1.0 | 1.0 | 1.0 | 1.0 | 1.0 |
| | Stearic Acid | 2.0 | 2.0 | 2.0 | 2.0 | 2.0 | 2.0 | 2.0 |
| | Zinc Oxide | 4.0 | 4.0 | 4.0 | 4.0 | 4.0 | 4.0 | 4.0 |
| | Sulfur (containing 5% oil) | 2.8 | 2.8 | 2.8 | 2.8 | 2.8 | 2.8 | 2.8 |
| | Vulcanization Accelerator | 0.7 | 0.7 | 0.7 | 0.7 | 0.7 | 0.7 | 0.7 |
| Evaluation Results | Fuel Efficiency index | 128 | 135 | 150 | 133 | 151 | 110 | 140 |
| | EB index: New Rubber | 101 | 100 | 102 | 102 | 101 | 101 | 95 |
| | EB index: Oxygen-Degraded Rubber | 103 | 106 | 108 | 103 | 109 | 100 | 96 |
| | Processability index | 98 | 95 | 92 | 98 | 93 | 98 | 90 |

Table 4

| | | Comparative Example | | | | | | | | |
|---|---|---|---|---|---|---|---|---|---|---|
| | | 1 | 2 | 3 | 4 | 5 | 6 | 7 | 8 | 9 |
| Formula (parts by mass) | NR | 100 | 100 | 100 | 100 | 100 | 100 | 100 | 100 | 40 |
| | IR | — | — | — | — | — | — | — | — | — |
| | BR | — | — | — | — | — | — | — | — | 60 |
| | Sulfide Compound 1 | — | 0.02 | 10.0 | 1.0 | 2.0 | 1.0 | 1.0 | 1.0 | 1.0 |
| | Sulfide Compound 2 | — | — | — | — | — | — | — | — | — |
| | Carbon Black A1 ($N_2SA$: 40) | 45 | 45 | 45 | 10 | — | 3 | 10 | — | 45 |
| | Carbon Black A2 ($N_2SA$: 34) | — | — | — | — | 60 | — | — | — | — |
| | Carbon Black B1 ($N_2SA$: 119) | — | — | — | — | — | 32 | 35 | 45 | — |
| | (Content of Sulfide Compound to Carbon Black (parts by mass)) | (0.00) | (0.04) | (22.2) | (10.0) | (3.33) | (2.86) | (2.22) | (2.22) | (2.22) |
| | C5 Petroleum Resin | 2.0 | 2.0 | 2.0 | 2.0 | 2.0 | 2.0 | 2.0 | 2.0 | 2.0 |
| | TDAE Oil | 2.0 | 2.0 | 2.0 | 2.0 | 8.0 | 2.0 | 2.0 | 2.0 | 2.0 |
| | Antiaging Agent 1 | 1.0 | 1.0 | 1.0 | 1.0 | 3.0 | 1.0 | 1.0 | 1.0 | 1.0 |
| | Antiaging Agent 2 | 1.0 | 1.0 | 1.0 | 1.0 | 1.0 | 1.0 | 1.0 | 1.0 | 1.0 |
| | Stearic Acid | 2.0 | 2.0 | 2.0 | 2.0 | 2.0 | 2.0 | 2.0 | 2.0 | 2.0 |
| | Zinc Oxide | 4.0 | 4.0 | 4.0 | 4.0 | 4.0 | 4.0 | 4.0 | 4.0 | 4.0 |
| | Sulfur (containing 5% oil) | 2.8 | 2.8 | 2.8 | 2.8 | 2.8 | 2.8 | 2.8 | 2.8 | 2.8 |
| | Vulcanization Accelerator | 0.7 | 0.7 | 0.7 | 0.7 | 0.7 | 0.7 | 0.7 | 0.7 | 0.7 |
| Evaluation Results | Fuel Efficiency index | 100 | 102 | 138 | 105 | 135 | 113 | 112 | 110 | 102 |
| | EB index New Rubber | 100 | 101 | 80 | 110 | 85 | 95 | 95 | 95 | 95 |
| | EB index Oxygen-Degraded Rubber | 100 | 100 | 88 | 108 | 82 | 92 | 93 | 92 | 85 |
| | Processability index | 100 | 98 | 72 | 105 | 90 | 83 | 82 | 80 | 88 |

From the results shown in Tables 1~4, it is found that when a tire is provided with an inner member made of a rubber composition, which is formed by using a rubber component containing a predetermined amount of an isoprene-based rubber and by using respectively predetermined amounts of a particular carbon black and a particular sulfide compound, the tire is produced to exhibit excellent fuel efficiency while processability and rubber strength are maintained.

## Claims

1. An unvulcanized tire provided with an inner member made of a rubber composition, the rubber composition comprising:

    a rubber component containing an isoprene-based rubber at 60~100 mass%;
    15~55 parts by mass of a carbon black based on 100 parts by mass of the rubber component; and
    0.05~20 parts by mass of a sulfide compound, represented by formula (I) below, based on 100 parts by mass of the carbon black,
    wherein the carbon black is made up of 5~55 parts by mass of a carbon black (A) having a nitrogen adsorption specific surface area of less than 50 $m^2/g$ and of 0~30 parts by mass of a carbon black (B) having a nitrogen adsorption specific surface area of 50 $m^2/g$ or greater:

    [chemical formula 1]

    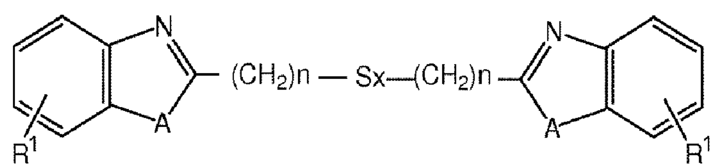

    (I)

    wherein in the formula $R^1$ represents a hydrogen atom, a linear or branched alkyl or alkenyl group having 1-6 carbon atoms, or a cyclic alkyl or alkenyl group having 3~6 carbon atoms, A represents O, S, NH or $NR^2$, $R^2$ represents a linear or branched alkyl or alkenyl group having 1~6 carbon atoms, or a cyclic alkyl or alkenyl

group having 3~6 carbon atoms, n represents a whole number of 1~6, and x represents a whole number of 1~4.

**2.** The unvulcanized tire according to Claim 1, wherein the content of the isoprene-based rubber in the rubber component is 90~100 mass%, and the content of the sulfide compound is 0.10~10 parts by mass based on 100 parts by mass of the carbon black.

**3.** The unvulcanized tire according to Claim 1 or 2, wherein the rubber composition further comprises 3.0~10.0 parts by mass of zinc oxide based on 100 parts by mass of the rubber component.

**4.** The unvulcanized tire according to any of the preceding Claims further comprising a plurality of ply cords comprising a plurality of steel cords.

**5.** The unvulcanized tire according to any of the preceding Claims, wherein the inner member is at least one of a sidewall, a clinch, a wing, a breaker, a ply, a sidewall packing, a chafer and a tie gum.

**6.** A tire being obtainable by vulcanizing the unvulcanized tire according to any of the preceding Claims.

**7.** The tire according to Claim 6, wherein the tire is an all-steel tire using steel cords as ply cords.

**8.** A method for manufacturing a tire, the tire being provided with an inner member made of a rubber composition formed with a rubber component containing an isoprene-based rubber at 60~100 mass%;
15~55 parts by mass of a carbon black based on 100 parts by mass of the rubber component;
0.05~20 parts by mass of a sulfide compound, represented by formula (I) below, based on 100 parts by mass of the carbon black; and
the carbon black is made up of 5~55 parts by mass of a carbon black (A) having a nitrogen adsorption specific surface aea of less than 50 $m^2/g$ and of 0-30 parts by mass of a carbon black (B) having a nitrogen adsorption specific surface area of 50 $m^2/g$ or greater, comprising:

an X-kneading process; and
an F-kneading process,
wherein the sulfide compound is added in the F-kneading process:

[chemical formula 2]

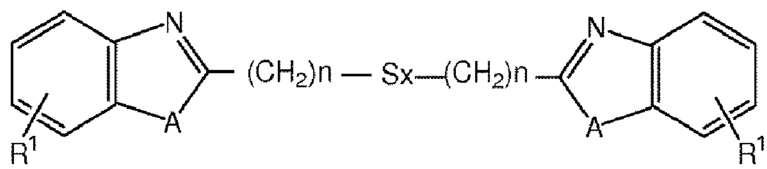

( I )

wherein in the formula $R^1$ represents a hydrogen atom, a linear or branched alkyl or alkenyl group having 1~6 carbon atoms, or a cyclic alkyl or alkenyl group having 3~6 carbon atoms, A represents O, S, NH or $NR^2$, $R^2$ represents a linear or branched alkyl or alkenyl group having 1~6 carbon atoms, or a cyclic alkyl or alkenyl group having 3~6 carbon atoms, n represents a whole number of 1~6, and x represents a whole number of 1~4.

Europäisches Patentamt
European Patent Office
Office européen des brevets

# EUROPEAN SEARCH REPORT

Application Number
EP 15 18 0926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 738 208 A1 (SHIKOKU CHEM [JP]) 4 June 2014 (2014-06-04)<br>* paragraphs [0001], [0013], [0028], [0029], [0030], [0037], [0038], [0041], [0064] *<br>* examples 1-6,7-12 *<br>* claims 1,2 * | 1-8 | INV.<br>C08K5/378 |
| A | US 2012/285599 A1 (MIYAZAKI TATSUYA [JP]) 15 November 2012 (2012-11-15)<br>* paragraphs [0002], [0008], [0039] *<br>* claims 1,3,5,7,9,11 * | 1-8 | |
| A | US 2014/228495 A1 (MIYAZAKI TATSUYA [JP]) 14 August 2014 (2014-08-14)<br>* paragraphs [0001], [0007], [0010], [0013], [0073], [0074], [0076] *<br>* claims 9,18 * | 1-8 | |
| A | JP 2010 285515 A (SUMITOMO RUBBER IND) 24 December 2010 (2010-12-24)<br>* paragraphs [0001], [0007], [0011], [0014], [0017], [0019], [0030], [0033] - [0035], [0042] *<br>* paragraph [0051] - paragraph [0054] *<br>* claims 1,6,7,8 * | 1-8 | |

TECHNICAL FIELDS SEARCHED (IPC)

C08K

The present search report has been drawn up for all claims

1

| Place of search | Date of completion of the search | Examiner |
|---|---|---|
| Munich | 11 December 2015 | Vandoolaeghe, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 15 18 0926

This annex lists the patent family members relating to the patent documents cited in the above-mentioned European search report. The members are as contained in the European Patent Office EDP file on
The European Patent Office is in no way liable for these particulars which are merely given for the purpose of information.

11-12-2015

| Patent document cited in search report | Publication date | Patent family member(s) | Publication date |
|---|---|---|---|
| EP 2738208 A1 | 04-06-2014 | CN 103703071 A | 02-04-2014 |
| | | EP 2738208 A1 | 04-06-2014 |
| | | JP 5637950 B2 | 10-12-2014 |
| | | JP 2013023610 A | 04-02-2013 |
| | | KR 20140041788 A | 04-04-2014 |
| | | US 2014155541 A1 | 05-06-2014 |
| | | WO 2013015224 A1 | 31-01-2013 |
| US 2012285599 A1 | 15-11-2012 | CN 102775648 A | 14-11-2012 |
| | | JP 5395113 B2 | 22-01-2014 |
| | | JP 2012236958 A | 06-12-2012 |
| | | US 2012285599 A1 | 15-11-2012 |
| US 2014228495 A1 | 14-08-2014 | CN 103930480 A | 16-07-2014 |
| | | JP 5406964 B2 | 05-02-2014 |
| | | JP 2013122038 A | 20-06-2013 |
| | | KR 20140097119 A | 06-08-2014 |
| | | US 2014228495 A1 | 14-08-2014 |
| | | WO 2013069359 A1 | 16-05-2013 |
| JP 2010285515 A | 24-12-2010 | JP 5466434 B2 | 09-04-2014 |
| | | JP 2010285515 A | 24-12-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013023610 A


### Non-patent literature cited in the description


- Rubber, unvulcanized -- Physical property -- Part 1: Determination of Mooney viscosity and pre-vulcanization characteristics with Mooney viscometer. *JIS K 6300-1*